# EUROPÄISCHE PATENTSCHRIFT

(11) **EP 0 729 005 B1**
(45) Veröffentlichungstag und Bekanntmachung des Hinweises auf die Patenterteilung: **05.08.1998**
(21) Anmeldenummer: 95102540.2
(22) Anmeldetag: 23.02.1995
(51) Int. Cl.: G01B 5/008, G01B 7/008, G01B 21/04, B23Q 17/00, B25J 9/16

(54) **Messvorrichtung zur Kontrolle der geometrischen und dynamischen Genauigkeit von NC-Werkzeugmaschinen und Industrierobotern**
Measuring device for checking the geometrie and dynamic precision of NC machining tools and industrial robots
Dispositif de mesure pour la vérification de la précision géométrique et dynamique des machines-outil NC et des robots industriels

(43) Veröffentlichungstag der Anmeldung: 28.08.1996
(73) Patentinhaber: INSTITUT FÜR FERTIGUNGSTECHNIK DER TU GRAZ, 8010 Graz (AT)
(72) Erfinder: Haas, Franz, Dipl. Ing., Dr.techn., A-8510 Stainz (AT)

(56) Entgegenhaltungen:
- EP-A- 0 155 084
- EP-A- 0 545 658
- EP-A- 0 597 299
- FR-A- 2 658 442
- GB-A- 2 203 837
- US-A- 5 028 180
- US-A- 5 111 590
- MICROTECHNIC, Nr. 1, 1993 ZURICH, CH, Seiten 16-19, XP 000334948 W. GÖTZE ET AL. 'integration der cnc-messtechnik in fertigungslinien.'
- PATENT ABSTRACTS OF JAPAN vol. 14 no. 378 (M-1011) ,15.August 1990 & JP-A-02 139112 (TOYODA MACH WORKS LTD.) 29.Mai 1990,

## Beschreibung

Die Erfindung betrifft eine Meßvorrichtung zur Kontrolle der geometrischen und dynamischen Genauigkeit zweier relativ zueinander bewegter Maschinenteile sowie ein entsprechendes Verfahren.

Werkzeugmaschinen sind mit Fehlern behaftet, welche Maß-, Form- und Lagefehler am Werkstück bewirken. Bei NC-Maschinen kommen noch dynamische Einflüsse, die von Steuerungen und Vorschub-Regelkreisen resultieren, hinzu. Diese bewirken, daß die vom Werkzeug relativ zum Werkstück abgefahrene Bahn von der programmierten Bahn abweicht.

Zur Beurteilung der Genauigkeit der NC-Maschine gilt es, die geometrischen und die dynamischen Fehler zu messen. In allen Fällen ist es möglich, eine Probebearbeitung an einem ausgewählten Werkstück durchzuführen und dieses anschließend zu vermessen. Dabei ist es aber äußerst schwierig, die Fehlerursachen zu analysieren, weil noch die technologischen Einflüsse vom Werkzeug und den Schnittbedingungen hinzukommen. Man trachtet daher, Methoden und Vorrichtungen zu entwickeln, um an der Maschine selbst die Abweichung der fehlerbehafteten Bahn von der programmierten Bahn zu messen. Zur Überprüfung der geometrischen Genauigkeit von NC-Werkzeugmaschinen sind etliche Vorrichtungen und Verfahren bekannt. Dabei gewinnt der sogenannte Kreisformtest zunehmende Bedeutung. Der Kreisformtest erlaubt die Überprüfung der dynamischen Eigenschaften der NC-Maschine im Bahnsteuerbetrieb sowie Aussagen über die Maschinengeometrie. Als Bahn bietet sich ein Kreis an, weil er von allen bahngesteuerten NC-Maschinen in Form der Zirkularinterpolation realisiert werden kann und weil die Messung eines Kreises relativ einfach zu bewerkstelligen ist.

Zur Erzeugung einer Kreisbahn sind auf einer bahngesteuerten NC-Werkzeugmaschine zwei gradlinig bewegte und rechtwinkelig zueinander angeordnete Maschinenkomponenten, zum Beispiel die zwei Einheiten eines Kreuztisches, nach einem Sinus- und Cosinusgesetz synchron so zu bewegen, daß als resultierende Bewegung die besagte Kreisbahn entsteht. Infolge der beschränkten Dynamik der beiden beteiligten Regelkreise, infolge mechanischer Unvollkommenheiten und weiterer Störeinflüsse weicht der so erzeugte Kreis von dem idealen, fehlerfreien Kreis mehr oder weniger ab. Markant ist beispielsweise der Einfluß der Geschwindigkeit, der sich üblicherweise in einer Zunahme der Kreisverzerrungen bei Erhöhungen der Vorschubgeschwindigkeiten zeigt.

Beim Kreisformtest geht es darum, diese Kreisformabweichungen zu messen und das Ergebnis auszuwerten um Rückschlüsse auf die Güte der NC-Maschine abzuleiten.

Im US-Patent 4,435,905 wird eine Vorrichtung zur Durchführung des Kreisformtests beschrieben, die aus einem Stab besteht, an dessen Enden Kugeln angebracht sind, die in je einem Widerlager gelagert sind. Zur Messung werden die beiden Widerlager an der NC-Maschine derart befestigt, daß ihre Positionen den Positionen von Werkzeugen und Werkstücken entsprechen. Der Stab besteht aus zwei Teilen, die längsverschieblich miteinander verbunden sind, so daß die Stablänge variabel ist. Die Verschiebung der beiden Teile zueinander wird durch ein integriertes Längenmeßsystem erfaßt. Wird ein Stabende auf einer Kreisbahn um das andere Ende bewegt, so entsprechen die Meßwerte den Kreisformabweichungen.

Eine analoge Problematik gilt für Industrieroboter. Um Aussagen über die Genauigkeit eines Roboters treffen zu können, müssen die Bahnfehler der Roboterhand gemessen werden, wenn diese sich entlang einer programmierbaren Bahn bewegt. Auch zur Überprüfung der Bahngenauigkeit eines Industrieroboters bietet sich der Kreisformtest an. Das Problem ist hier jedoch weitaus komplexer als bei einer NC-Werkzeugmaschine, weil an der Bahnerzeugung nicht nur zwei Bewegungskomponenten beteiligt sind, sondern bis zu sechs Bewegungen synchron überlagert sind.

Bei einem der üblichen Knickarmroboter, welcher ausschließlich Drehgelenke besitzt, sind dies: drei Positionsgelenke im Roboterkörper und drei Orientierungsgelenke in der Roboterhand.

Um nun auch bei derartigen Maschinen die geometrische und dynamische Genauigkeit bestimmen zu können, wurde eine neue Meßvorrichtung entwickelt, die in der DE 44 19 909 A1 beschrieben ist.

Gemäß der DE 44 19 909 A1 besteht die Meßvorrichtung aus einem inertialfest montierten Grundkörper, auf dem ein Arm drehbar gelagert ist, der in seinem Endbereich eine Radialführung für ein mit einem zu prüfenden Maschinenteil lösbar verbundenes Antastelement aufweist. Zur Erfassung der Kreisbahnabweichung des Antastelementes ist ein mit diesem zusammenwirkendes, radial zur Drehachse des Armes angeordnetes Längenmeßgerät am Arm befestigt. Zusätzlich ist am Endbereich des Armes ein weiteres Längenmeßgerät parallel zur Drehachse des Armes zur Messung der axialen Verlagerung des Antastelementes vorgesehen.

Das radial zur Drehachse des Armes angeordnete Längenmeßgerät ist ein Taster mit einem sehr geringen Meßbereich, so daß ausschließlich die Abweichungen von einer vorgegebenen Kreisbahnbewegung gemessen werden können.

Aufgabe der Erfindung ist es, eine Meßvorrichtung zu schafften, mit welcher mit geringem Aufwand die geometrische und dynamische Genauigkeit von Maschinen erfaßt werden kann, und die vielseitig einsetzbar ist.

Diese Aufgabe wird von einer Meßvorrichtung mit den Merkmalen des Anspruches 1 gelöst.

Mit den in den abhängigen Ansprüchen angegebenen Merkmalen wird die Meßvorrichtung in besonders vorteilhafter Weise ausgestaltet. Ein Verfahren ist im Anspruch 15 angegeben.

Die besonderen Vorteile der Erfindung liegen darin, daß die Meßvorrichtung universell für Messungen von Kreisbewegungen, aber auch von Linearbewegungen innerhalb des gesamten Verfahrweges der relativ zueinander bewegten Maschinenteile geeignet ist. Bei allen Bewegungen erfolgt eine Simultanmessung von Linear- und Drehbewegungen, so daß die Meßvorrichtung auch zur Prüfung von Roboterbewegungen zur Erfassung aller Achsbewegungen geeignet ist. Trotz der universellen Einsatzbarkeit der Meßvorrichtung ist sie relativ einfach und robust aufgebaut, da sie aus Standardmeßsystemen besteht.

Anhand von Ausführungsbeispielen wird die Erfindung nachstehend mit Hilfe der Zeichnungen näher erläutert.

Es zeigt
- Figur 1: einen Schnitt einer erfindungsgemäßen Meßvorrichtung,
- Figur 2: eine Draufsicht der Meßvorrichtung gemäß Figur 1,
- Figur 3: einen Schnitt einer weiteren Meßvorrichtung,
- Figur 4: einen vergrößerten Querschnitt des Meßelementes aus Figur 1,
- Figur 5: einen Schnitt des Meßelementes gemäß der Figur 4 entlang der Linie V-V,
- Figur 6: einen weiteren Schnitt des Meßelementes aus Figur 1 im entkoppelten Zustand,
- Figur 7: einen weiteren Schnitt der erfindungsgemäßen Meßvorrichtung mit einer Auswerteeinrichtung und
- Figur 8: eine Aufstellung einiger möglicher Testmethoden.

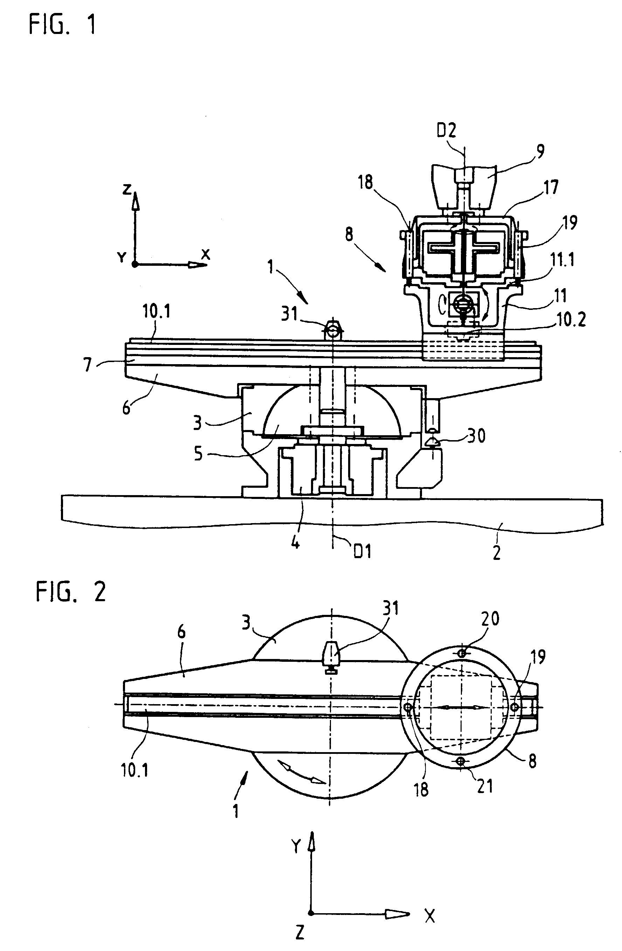

In Figur 1 ist eine erfindungsgemäße Meßvorrichtung 1 im Schnitt auf einem Schlitten 2 einer Werkzeugmaschine befestigt dargestellt. Die Meßvorrichtung 1 besteht aus einem Grundkörper 3, der zur Befestigung am Schlitten 2 dient und der Träger eines Winkelmeßgerätes 4 ist. Der Grundkörper 3 besitzt ein präzises und spielfreies Luftlager 5 zur drehbaren Lagerung eines Bauteiles 6 um eine vorgegebene Drehachse D1. Die Drehung des Bauteiles 6 gegenüber dem Grundkörper 3 wird mittels des Winkelmeßgerätes 4, vorzugsweise eines inkrementalen Drehimpulsgebers, gemessen.

Auf dem drehbar gelagerten Bauteil 6 befindet sich eine Linearführung 7 zur Führung eines Meßelementes 8, welches mit der Spindel 9 der Werkzeugmaschine lösbar verbunden ist. Wie aus der Draufsicht in Figur 2 zu sehen ist, gewährleistet die Linearführung 7 eine exakte radiale Längsbewegung des Meßelements 8 gegenüber dem Bauteil 6. Um dies zu gewährleisten, reicht die Linearführung 7 über den gesamten Verfahrweg zwischen Bauteil 6 und Meßelement 8 und besonders vorteilhaft auch über den gesamten möglichen Verfahrweg zwischen dem Schlitten 2 und der Spindel 9.

Zur Messung der senkrecht zur Drehachse D1 verlaufenden Linearbewegungen zwischen dem Grundkörper 3 und dem Meßelement 8 ist parallel zur Linearführung 7 ein Längenmeßgerät 10 vorgesehen. Dieses Längenmeßgerät 10 besteht aus einer Maßverkörperung 10.1, welche in Form eines inkrementalen Maßstabes entlang der Linearführung 7 angeordnet ist und eine Länge aufweist, die zumindest in etwa dem möglichen Verfahrweg der relativ zueinander bewegten Maschinenteile 2, 9 entspricht. Im gezeigten Beispiel ist der Maßstab 10.1 direkt an einer Fläche der Linearführung 7 befestigt. Die inkrementale Teilung des Maßstabes 10.1 wird von einer an sich bekannten Abtasteinheit 10.2 zur Bildung von positionsabhängigen elektrischen Signalen abgetastet. Die Abtasteinheit 10.2 ist an einem Meßschlitten 11 des Meßelements 8 ortsfest angebracht.

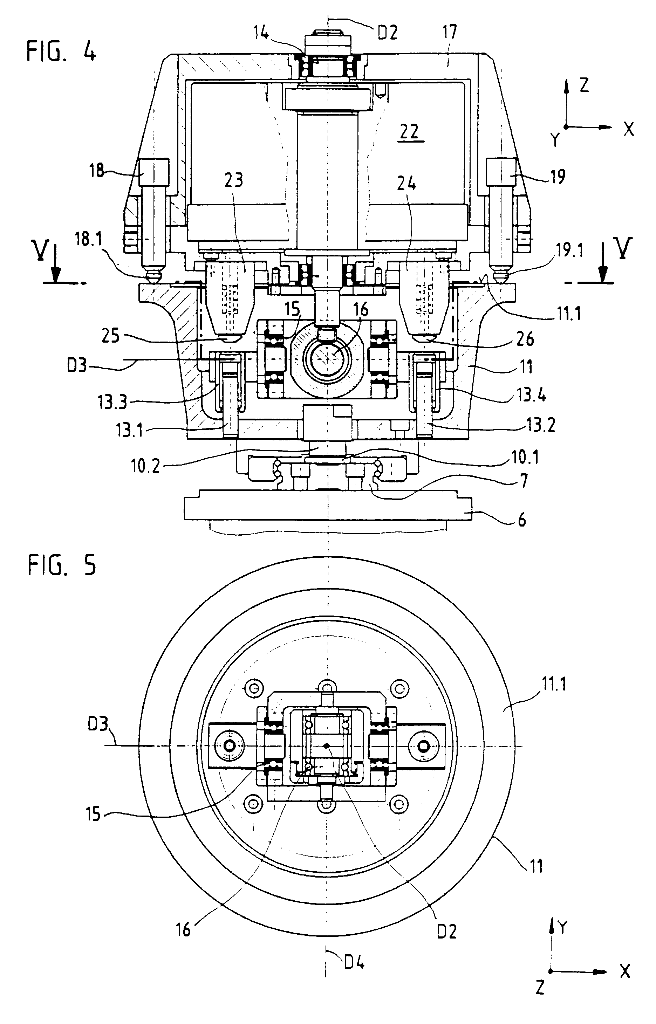

Um axiale Verschiebungen in Z-Richtung entlang der Drehachse D1 sowie Schwenkbewegungen zwischen der Spindel 9 und dem Meßschlitten 11 exakt messen zu können, ist im Meßelement 8 eine in allen Richtungen schwenkbare und drehbare Lagerung integriert. Diese Lagerung besteht gemäß den Figuren 4 und 5 aus insgesamt einer Linearführung 13 sowie drei Drehlagerungen 14, 15, 16 um drei Drehachsen D2, D3, D4.

Zur Befestigung des Meßelementes 8 an der Spindel 9 ist ein Träger 17 vorgesehen, der über die genannten Lagerungen 13 bis 16 relativ zum Meßschlitten 11 bewegbar ist.

Die Linearführung 13 ist im gezeigten Beispiel aus zwei am Meßschlitten 11 befestigten Bolzen 13.1 und 13.2 gebildet, mit denen zwei korrespondierende Buchsen 13.3 und 13.4 zusammenwirken, die somit eine Längsbewegung zwischen dem Meßschlitten 11 und dem Träger 17 entlang der Drehachse D2 in Z-Richtung ermöglichen. Diese Längsbewegung in Z-Richtung wird durch zumindest ein weiteres Längenmeßgerät 18 bis 21 gemessen. Im gezeigten Beispiel erfolgt diese Längenmessung mittels mehrerer Taster 18 bis 21, die im Träger 17 befestigt sind und deren Tastbolzen 18.1 bis 21.1 auf einer rechtwinkelig zur Drehachse D1 vorgesehenen Fläche 11.1 des Meßschlittens 11 aufliegen.

Eine Drehbewegung der Spindel 9 relativ zum Meßschlitten 11 um die Drehachse D2, welche im Normalfall parallel zur Drehachse D1 verläuft, wird durch das Drehlager 14 gewährleistet. Die Messung des Drehwinkels um die Drehachse D2 wird von einem Winkelmeßgerät 22 gemessen, dessen Abtasteinheit mit dem Träger 17, also mit der Spindel 9, und dessen Teilscheibe mit dem Meßschlitten 11 verbunden ist.

Eine weitere Drehbewegung des Trägers 17 relativ zum Meßschlitten 11 ist um die Drehachse D3 über das Drehlager 15 möglich. Ein weiteres Drehlager 16 ermöglicht die Drehbewegung des Trägers 17 relativ zum Meßschlitten 11 um die Drehachse D4. Die Drehbewegungen um die Drehachsen D3 und D4 werden durch die vier räumlich angeordneten Taster 18 bis 21 gemessen, indem die Längendifferenz zweier symmetrisch gegenüberliegender Taster 18, 20 und 19, 21 ausgewertet werden. Diese Drehbewegungen können aber auch mittels an den einzelnen Drehachsen D3 und D4 angebachten Winkelmeßgeräten direkt gemessen werden.

Um voneinander unabhängige Drehbewegungen um die drei Drehachsen D2, D3 und D4 zu gewährleisten, und trotzdem eine stabile, kompakte und spielfreie Lagerung zu erreichen, ist die dargestellte kardanische Lagerung besonders vorteilhaft. Durch diese Lagerung wird erreicht, daß sich die drei senkrecht aufeinanderstehenden Drehachsen D2, D3 und D4 in einem gemeinsamen Drehpunkt schneiden. Alternativ könnte die Lagerung auch aus einer Kugel bestehen, welche in einer Kugelpfanne drehbar gelagert ist.

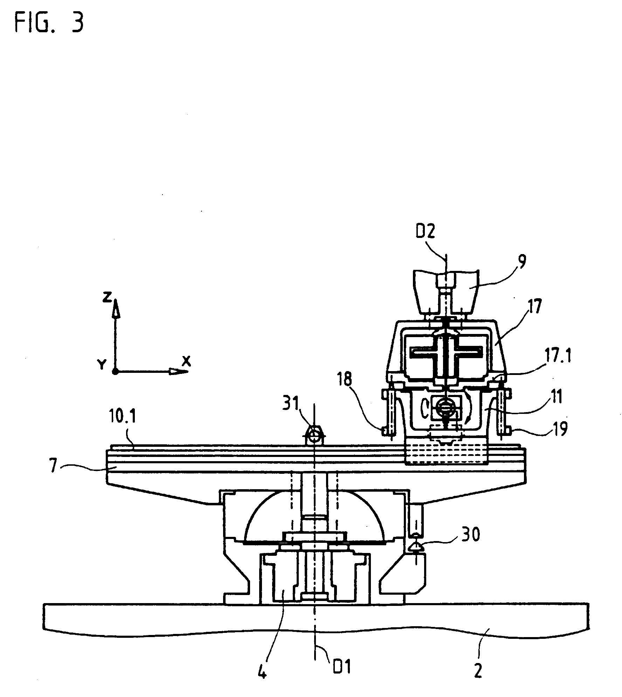

Wie in Figur 3 dargestellt ist, kann sich eine ebene Fläche 17.1 auch am Träger 17 und die Taster 18 bis 21 am Meßschlitten 11 befinden.

Weiterhin besteht die Möglichkeit, anstelle der Taster 18 bis 21 nur ein Längenmeßgerät einzusetzen, wenn die Drehbewegungen um die Drehachsen D2 bis D4 mittels Winkelmeßgeräten gemessen werden. In diesem Fall wäre der Abtastkopf dieses Längenmeßgerätes am Meßschlitten 11 und der Maßstab am Träger 17 befestigt. Selbstverständlich kann auch der Abtastkopf am Träger 17 befestigt werden, was aber den Nachteil hätte, daß elektrische Leitungen vom Meßschlitten 11 und vom Träger 17 zu einer Auswerteeinheit geführt werden müssen.

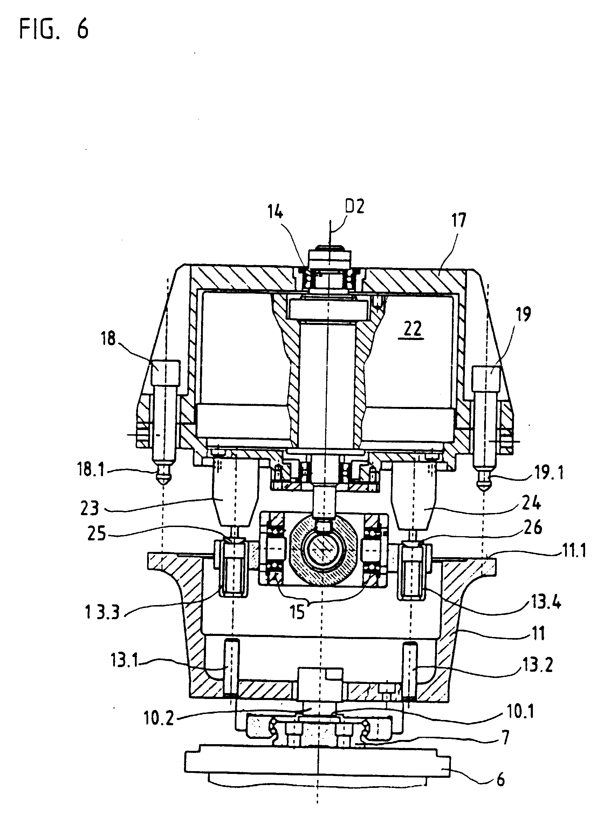

Die Bolzen 13.1 und 13.2 des Meßschlittens 11 bilden mit den Buchsen 13.3 und 13.4, welche am Träger 17 befestigt sind, eine lösbare Kupplung zwischen dem Meßschlitten 11 und dem Träger 17. Diese lösbare Kupplung ermöglicht ein automatisiertes Ankoppeln, was in Figur 6 dargestellt ist. Wenn eine Überprüfung einer Werkzeugmaschine durchgeführt werden soll, wird beispielsweise der Träger 17 automatisch gesteuert aus einem Werkzeugmagazin entnommen und an der Spindel 9 befestigt. Damit während dieser Bewegung eine vorgegebene Lagebeziehung zwischen dem Kardangelenk 14, 15, 16, und dem Träger 17 erhalten bleibt, bis die Buchsen 13.3. und 13.4 in den zugehörigen Bolzen 13.1 und 13.2 positioniert sind, werden die Buchsen 13.3, 13.4 mittels zweier ansteuerbarer Elektromagnete 23, 24 fixiert. Die Fixierung erfolgt, indem durch die Elektromagnete 23, 24 zwei Fixierelemente 25, 26 in Richtung der Buchsen 13.3, 13.4 ausgefahren werden und mit diesen zusammenwirken, bis die in Figur 4 gezeigte Betriebsstellung erreicht ist. In der Betriebsstellung werden die Elektromagnete 23, 24 abgeschaltet, wodurch die Fixierelemente 25, 26 durch Federkraft zurückgezogen werden und somit die Wirkverbindung mit den Buchsen 13.3, 13.4 gelöst und eine freie Bewegung zwischen Träger 17 und Meßschlitten 11 ermöglicht wird.

Um einen völlig automatisierten Meßablauf durchzuführen, ist es besonders vorteilhaft, wenn auch der Grundkörper 3 mit der Linearführung 7 und dem Längenmeßgerät 10 durch einen Palettenwechsler auf dem Schlitten 2 der Werkzeugmaschine numerisch gesteuert positioniert wird. Um während dieses Vorganges sowie des Ankoppelvorganges eine störende Relativbewegung zwischen dem Grundkörper 3 und dem drehbaren Bauteil 6 zu vermeiden, werden diese beiden Teile mittels eines Fixierelementes 30 geklemmt. Ein weiteres Fixierelement 31 ist zur Klemmung zwischen dem Bauteil 6 und dem Meßschlitten 11 vorgesehen. Beide Fixierelemente 30, 31 werden beispielsweise über einen Elektromagneten wie die Fixierelemente 25, 26 gemäß Figur 4 angesteuert.

Bei einer weiteren vorteilhaften Ausgestaltung sind im Meßschlitten 11 und/oder im Träger 17 Sensoren, beispielsweise berührungslos arbeitende Sensoren, angeordnet, um die erreichten Endpositionen nach dem erfolgreichen Ankoppelvorgang an eine Auswerteeinrichtung 27 zu melden und erst bei erfolgreichem Ankoppeln das Meßprogramm automatisch ablaufen zu lassen.

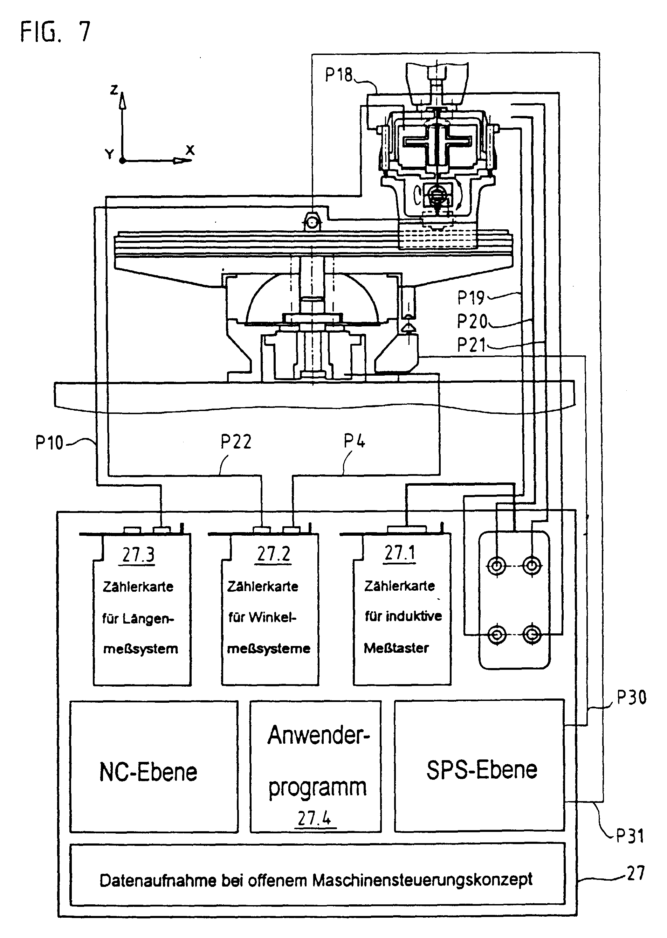

In Figur 7 ist zusätzlich zum Schnitt der erfindungsgemäßen Meßvorrichtung gemäß Figur 1 die Auswerteeinrichtung 27 dargestellt. Die Positionsmeßwerte P18 bis P21 der vier Taster 18 bis 21 werden einer Zählereinheit 27.1 der Auswerteeinrichtung 27 zugeführt und daraus die Kippwinkel um die beiden Drehachsen D3 und D4 ermittelt. Einer weiteren Zählereinheit 27.2 werden die Positionsmeßwerte P4, P22 der beiden Winkelmeßgeräte 4 und 22 zugeführt und daraus die Drehbewegungen um die beiden Drehachsen D1 und D2 ermittelt. Eine weitere Zählereinheit 27.3 ist zur Auswertung der Positionsmeßwerte P10 des Längenmeßgerätes 10 vorgesehen. Mittels einer Auswertesoftware 27.4 werden aus allen Meßergebnissen die statischen und dynamischen Positionsabweichungen ermittelt. Durch die Auswerteeinheit 27 werden auch die Fixierelemente 30, 31 mittels separater Leitungen P30, P31 angesteuert.

Mit der erfindungsgemäß ausgestalteten Meßvorrichtung 1 ist eine Überprüfung der geometrischen Genauigkeit einer CNC-Maschine nicht nur bei der Erstinbetriebnahme sondern auch vom Anwender selbst nach festgelegten Zeiträumen wiederkehrend durchführbar, um beherrschte Fertigungsprozesse mit immer enger gesteckten Toleranzgrenzen zu realisieren. Die Simultanmessung von Längen und Winkeln ermöglicht die eindeutige Aufstellung einer Fehlermatrix zur Software-Kompensation von statischen und dynamischen Abweichungskenngrößen. Die Messungen können mit geringem Zeit- und Personalaufwand durchgeführt werden. Durch fest vorgegebene Meßprogramme werden Wiederholungsmessungen bei kleinem Meßrüstaufwand durchgeführt.

Grundsätzlich besitzt die Meßvorrichtung 1 sechs Freiheitsgrade, wobei vier rotatorische (um die Drehachsen D1, D2, D3, D4) und zwei translatorische (X- und Z-Richtung) Gelenke die Aufnahme von Einzelabweichungen unabhängig voneinander ermöglichen. Mit der Winkelinformation P4 des Drehtisches 3, 6 und der Radialposition P10 des Meßschlittens 11 kann eine 2D-Auswertung in Polarkoordinaten erfolgen.

Durch den Einsatz des Winkelmeßgerätes 22, mit dem Verdrehungen zwischen der Spindel 9 und dem Meßschlitten 11 um die Drehachse D2 gemessen werden, kann der Gierwinkel bei einer Linearbewegung entlang der Führung 7 bestimmt werden. Der Gierwinkel ergibt sich aus dem Differenzwert der Positionsmeßwerte P4 und P22 der Winkelmeßgeräte 4 und 22. Weiterhin kann mit dem Winkelmeßgerät 22 das Verhalten von Zusatzachsen erfaßt werden, was insbesondere bei Robotern oder auch bei gesteuert drehbaren Spindeln von Werkzeugmaschinen vorteilhaft ist.

Durch das erfindungsgemäße Längenmeßgerät 10 entfällt jede Einschränkung durch kleine Tasterhübe, so daß eine rasche Variation des Kreisdurchmessers beim Kreisformtest und auch andere Bahnkurven wie Rechtecke und Polygone untersucht werden können. Durch die Verwendung der Winkelmeßgeräte 4, 22 ist eine echte Winkelmessung möglich und keine Berechnung der Winkellage aus Vorschubgeschwindigkeit und Zeit.

Die Längenmeßgeräte 10, 18 bis 21 sowie die Winkelmeßgeräte 4, 22 sind vorzugweise lichtelektrische inkrementale Systeme, sie können aber auch nach anderen physikalischen Prinzipien wie kapazitiv oder magnetisch arbeiten. Als Längenmeßgeräte 10, 18 bis 21 bieten sich auch Interferometer an.

Die Auswertesoftware 27.4 sowie die Zählereinheiten 27.1, 27.2, 27.3 können auf einem Meß-PC oder einer CNC-Steuerung installiert sein.

Die Auswertesoftware 27.4 kann auch die möglichen Meßabläufe zur Prüfung einer CNC-Steuerung enthalten. Ein Testprogramm für eine automatisierte Schnellabnehme einer CNC-gesteuerten Werkzeugmaschine für die XY-Ebene kann folgende Meßläufe enthalten.

Während der Meßläufe werden sowohl bei den statischen als auch den dynamischen Messungen neben der Position auch Kippwinkel (Gieren, Rollen, Nicken) und Geradheitsabweichungen erfaßt.
* Bewegung in X-Richtung:
   - Positionsmessung mit statistischer Auswertung nach ISO 230-2 (z.B. 5 Zyklen)
   - Dynamische Messung mit unmittelbarem Vergleich zum Maschinenmeßsystem
   - Step-Response-Test bei Verkleinerung der Schrittweite
* Bewegung in Y-Richtung:
   - Positionsmessung mit statistischer Auswertung nach ISO 230-2 (z.B. 5 Zyklen)
   - Dynamische Messung mit unmittelbarem Vergleich zum Maschinenmeßsystem
   - Step-Response-Test bei Verkleinerung der Schrittweite
* Kreisformtest:
   - Kreisformtest bei niedriger Vorschubgeschwindigkeit im Uhrzeigersinn
   - Kreisformtest bei niedriger Vorschubgeschwindigkeit im Gegenuhrzeigersinn
   - Kreisformtest bei hoher Vorschubgeschwindigkeit im Uhrzeigersinn
   - Kreisformtest bei hoher Vorschubgeschwindigkeit im Gegenuhrzeigersinn
* Eckentest:
   - Eckentest bei niedriger Vorschubgeschwindigkeit im Uhrzeigersinn
   - Eckentest bei niedriger Vorschubgeschwindigkeit im Gegenuhrzeigersinn
   - Eckentest bei hoher Vorschubgeschwindigkeit im Uhrzeigersinn
   - Eckentest bei hoher Vorschubgeschwindigkeit im Gegenuhrzeigersinn

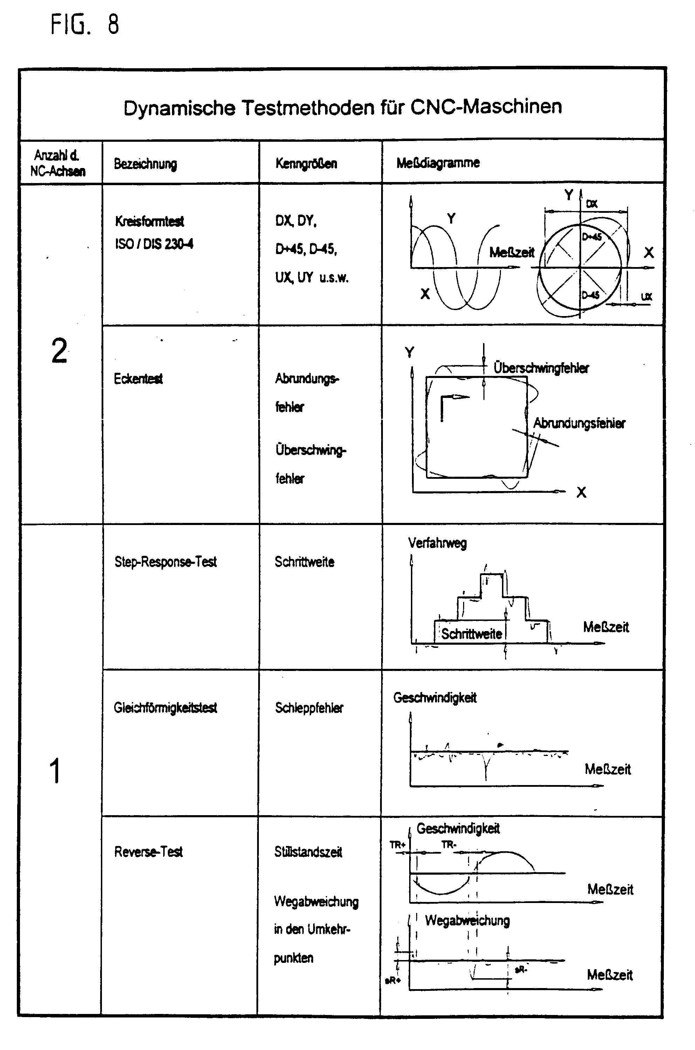

In Figur 8 sind einige der möglichen dynamischen Testmethoden für CNC-Maschinen aufgelistet und die Meßdiagramme dazu dargestellt. Die Meßdiagramme können zur Kontrolle am Bildschirm der CNC-Steuerung angezeigt werden und gegebenenfalls mittels eines Druckers ausgedruckt werden.

## Patentansprüche

1. Meßvorrichtung zur Kontrolle der geometrischen und dynamischen Genauigkeit zweier relativ zueinander bewegter Maschinenteile (2, 9), insbesondere eines NC-gesteuerten Arbeitskopfes von automatischen Fertigungs- oder Manipulationseinrichtungen wie NC-Werkzeugmaschinen und Industrierobotern mit
- einem an einem der Maschinenteile (2) befestigbaren Grundkörper (3),
- einem Meßelement (8), das mit dem weiteren Maschinenteil (9) lösbar verbindbar ist,
- einem am Grundkörper (3) drehbar gelagerten Bauteil (6), das eine Führung (7) des Meßelementes (8) aufweist,
- einem Winkelmeßgerät (4), mit dem die Drehung des Bauteiles (6) gegenüber dem Grundkörper (3) um eine erste Drehachse (D1) meßbar ist,
- einem radial zur Drehachse (D1) des Bauteils (6) vorgesehenen Längenmeßgerät (10) das die Bewegungen des Meßelementes (8) längs der Führung (7) erfaßt, wobei dieses Längenmeßgerät (10) eine Maßverkörperung (10.1) und eine relativ dazu bewegliche Abtasteinheit (10.2) aufweist und der Meßbereich des Längenmeßgerätes (10) in etwa dem möglichen Verfahrweg der relativ zueinander bewegten Maschinenteile (2, 9) entspricht,
- einem Meßschlitten (11), an dem die Abtasteinheit (10.2) vorgesehen ist, wobei der Meßschlitten (11) zugleich Träger zumindest eines weiteren Längenmeßgerätes (18 bis 21) zur Messung der axialen Verlagerung zwischen dem Meßschlitten (11) und dem am weiteren Maschinenteil (9) lösbar verbindbaren Träger (17) ist.

2. Meßvorrichtung nach Anspruch 1, wobei zwischen dem Träger (17) und dem Meßschlitten (11) eine Lagerung (15, 16) mit mindestens zwei senkrecht aufeinanderstehenden zweiten und dritten Drehachsen (D3, D4) vorgesehen ist, um welche der Träger (17) relativ zum Meßschlitten (11) schwenkbar ist.

3. Meßvorrichtung nach Anspruch 2, wobei die zweite und dritte Drehachse (D3, D4) in einer Ebene liegen, die parallel zu der Ebene ist, in der der Meßschlitten (11) relativ zur Führung (7) verschiebbar ist.

4. Meßvorrichtung nach Anspruch 2 oder 3, wobei zwischen dem Träger (17) und dem Meßschlitten (11) eine weitere Lagerung (14) mit einer zu den genannten Drehachsen (D3, D4) senkrecht stehenden vierten Drehachse (D2) vorgesehen ist.

5. Meßvorrichtung nach Anspruch 4, wobei die Lagerung (14, 15, 16) eine kardanische Lagerung mit drei senkrecht aufeinanderstehenden Gelenkwellen ist, welche die Drehachsen (D2, D3, D4) bilden.

6. Meßvorrichtung nach einem der Ansprüche 2 bis 5, wobei am Meßschlitten (11) oder am Träger (17) eine Antastoberfläche (11.1) vorgesehen ist, und daß am gegenüberliegenden Träger (17) oder Meßschlitten (11) mindestens drei räumlich verteilte Längenmeßgeräte (18 bis 21) befestigt sind, welche mit der Antastoberfläche (11.1) zusammenwirken und bei Relativdrehungen zwischen dem Träger (17) und dem Meßschlitten (11) um die Drehachsen (D3, D4) Abstandsänderungen zwischen der Antastoberfläche (11.1) und den Längenmeßgeräten (18 bis 21) auftreten, welche mit den Längenmeßgeräten (18 bis 21) meßbar sind.

7. Meßvorrichtung nach einem der Ansprüche 4 oder 5, wobei zur Messung der Drehbewegung zwischen dem Meßschlitten (11) und dem Träger (17) um die vierte Drehachse (D2) ein weiteres Winkelmeßgerät (22) vorgesehen ist.

8. Meßvorrichtung nach Anspruch 5, wobei an den drei Gelenkwellen Winkelmeßgeräte (22) befestigt sind, wobei mit den Winkelmeßgeräten (22) die Drehbewegungen zwischen dem Träger (17) und dem Meßelement (11) um die drei Drehachsen (D2, D3, D4) meßbar sind.

9. Meßvorrichtung nach einem der vorhergehenden Ansprüche, wobei die Führung (7) eine Länge aufweist, die zumindest etwa dem möglichen Verfahrweg der relativ zueinander bewegten Maschinenteile (2, 9) entspricht.

10. Meßvorrichtung nach Anspruch 9, wobei die Maßverkörperung (10.1) an der Führung (7) vorgesehen ist.

11. Meßvorrichtung nach einem der vorhergehenden Ansprüche, wobei der Meßschlitten (11) und der Träger (17) des Meßelementes (8) über eine Kupplung (13.1 bis 13.4) lösbar miteinander verbunden sind.

12. Meßvorrichtung nach Anspruch 11, wobei die Kupplung eine Linearführung ist, die aus mehreren Bolzen (13.1, 13.2) und korrespondierenden Buchsen (13.3, 13.4) besteht.

13. Meßvorrichtung nach Anspruch 12, wobei die Buchsen (13.3, 13.4) an einer Gelenkwelle einer Drehlagerung (15) und die Bolzen (13.1, 13.2) an dem Meßschlitten (11) angeordnet sind und senkrecht zur ersten Linearführung (7) sowie parallel zur ersten Drehachse (D1) verlaufen.

14. Meßvorrichtung nach Anspruch 12 oder 13, wobei am Träger (17) Fixierelemente (25, 26) vorgesehen sind, die während des Zusammenfügens von Träger (17) und Meßschlitten (11) mit den Buchsen (13.3, 13.4) in Eingriff und nach erfolgter Verbindung außer Eingriff bringbar sind.

15. Verfahren zur Kontrolle der geometrischen und dynamischen Genauigkeit eines NC-gesteuerten Arbeitskopfes (9) von automatischen Fertigungs- oder Manipulationseinrichtungen mit einer Meßvorrichtung (1) gemäß einem der Ansprüche 11 bis 14, wobei die Ankopplung des Trägers (17) an den Meßschlitten (11) numerisch gesteuert erfolgt.

16. Verfahren nach Anspruch 15, wobei die erfolgte Ankopplung an die NC-Steuerung gemeldet wird und daraufhin ein Meßprogramm zur numerisch gesteuerten Bewegung der zwei relativ zueinander bewegbaren Maschinenteile (2, 9) gestartet wird.

## Claims

1. A measuring device for checking the geometrical and dynamic accuracy of two machine parts (2, 9) movable relative to one another, especially an NC working head of automatic manufacturing or manipulating devices such as NC machine tools and industrial robots, with
- a base body (3) which can be fixed to one of the machine parts (2),
- a measuring element (8) which can be releasably attached to the further machine part (9),
- a component (6) mounted rotatably on the base body (3) and which comprises a guide (7) for the measuring element (8),
- an angle measuring apparatus (4) with which the rotation of the component (6) relative to the base body (3) about a first axis of rotation (D1) can be measured,
- a length measuring apparatus (10) provided radially with respect to the axis of rotation (D1) of the component (6), which detects the movements of the measuring element (8) along the guide (7), wherein this length measuring apparatus (10) comprises a measuring body (10.1) and a sensing unit (10.2) movable relative thereto and the measuring range of the length measuring apparatus (10) corresponds approximately to the possible path of displacement of the machine parts (2, 9), movable relative to one another,
- a measuring slide (11) on which the sensing unit (10.2) is provided, wherein the measuring slide (11) is at the same time the support for at least one further length measuring apparatus (18 to 21) for measuring the axial displacement between the measuring slide (11) and the carrier (17) which can be releasably attached to the further machine part (9).

2. A measuring device according to claim 1, wherein a mount (15, 16) is provided between the carrier (17) and the measuring slide (11), with at least two second and third axes of rotation (D3, D4) perpendicular to one another, about which the carrier (17) can be pivoted relative to the measuring slide (11).

3. A measuring device according to claim 2, wherein the second and third axes of rotation (D3, D4) lie in a plane which is parallel to the plane in which the measuring slide (11) can move relative to the guide (7).

4. A measuring device according to claim 2 or 3, wherein a further mount (14) is provided between the camer (17) and the measuring slide (11), with a fourth axis of rotation (D2) perpendicular to the said axes of rotation (D3, D4).

5. A measuring device according to claim 4, wherein the mount (14, 15, 16) is a Cardan mount with three articulated shafts perpendicular to one another, which form the axes of rotation (D2, D3, D4).

6. A measunng device according to any of claims 2 to 1, wherein a sensing surface (11.1) is provided on the measuring slide (11) or on the carrier (17), and in that at least three spatially distributed length measuring apparatuses (18 to 21) are fixed on the opposed carrier (17) or measuring slide (11) and cooperate with the sensor surface (11.1) and wherein changes in the distances between the sensor surface (11.1) and the length measuring apparatuses (18 to 21) occur when there are relative rotations between the carrier (17) and the measuring slide (11) about the axes of rotation (D3, D4), which can be measured by the length measuring apparatuses (18 to 21).

7. A measuring device according to either claim 4 or 5, wherein a further angle measuring apparatus (22) is provided for measuring the rotary movement between the measuring slide (11) and the carrier (17) about the fourth axis of rotation (D2).

8. A measuring device according to claim 5, wherein angle measuring apparatuses (22) are attached to the three articulated shafts, wherein the rotary movements between the carrier (17) and the measuring slide (11) about the three axes of rotation (D2, D3, D4) can be measured by the angle measuring apparatuses (22).

9. A measuring device according to any of the preceding claims, wherein the guide (7) has a length which corresponds at least approximately to the possible path of movement of the machine parts (2, 9) movable relative to one another.

10. A measuring device according to claim 9, wherein the measuring body (10.1) is provided on the guide (7).

11. A measuring device according to any of the preceding claims, wherein the measuring slide (11) and the carrier (17) of the measuring element (8) are releasable connected together by a coupling (13.1 to 13.4).

12. A measuring device according to claim 11, wherein the coupling is a linear guide which consists of a plurality of pins (13.1, 13.2) and corresponding bushes (13.3, 13.4).

13. A measuring device according to claim 12, wherein the bushes (13.3, 13.4) are arranged on an articulated shaft of a rotary bearing (15) and the pins (13.1, 13.2) are arranged on the measuring slide (11) and run perpendicular to the first linear guide (7) and parallel to the first axis of rotation (D1).

14. A measuring device according to claim 12, or 13, wherein fixing elements (25, 26) are provided on the carrier (17), which can be brought into engagement with the bushes (13.3, 13.4) during assembly of the carrier (17) and the measuring slide (11) and can be brought out of engagement after completion of the connection.

15. A method of checking the geometrical and dynamic accuracy of an NC working head (9) of automatic manufacturing or manipulating devices, with a measuring device (1) according to any of claims 1 to 14, wherein the coupling of the carrier (17) to the measuring slide (11) is effected under numerical control.

16. A method according to claim 15, wherein the completion of coupling is communicated to the numerical control and a measuring program is then started for numerically controlled movement of the two machine parts (2, 9) movable relative to one another.

## Revendications

1. Dispositif de mesure pour le contrôle de la précision géométrique et dvnamique de deux éléments de machine (2, 9) déplacés l'un par rapport à l'autre, en particulier d'une tête de travail à commande numérique de dispositifs automatiques de fabrication ou de manipulation tels que des machines-outils à commande numérique et des robots industriels, comprenant
- un corps de base (3) susceptible d'être fixé à l'un des éléments de machine (2),
- un élément de mesure (8) susceptible d'être relié de façon amovible à l'autre élément de machine (9),
- un composant (6) monté en rotation sur le corps de base (3) et présentant un guide (7) pour l'élément de mesure (8),
- un appareil de mesure d'angle (4) permettant de mesurer la rotation du composant (6) par rapport au corps de base (3) autour d'un premier axe de rotation (D1),
- un appareil de mesure de longueur (10) prévu radialement par rapport à l'axe de rotation (D1) du composant (6) et mesurant les mouvements de l'élément de mesure (8) le long du guide (7), cet appareil de mesure de longueur (10) présentant une règle de mesure (10.1) et une unité d'exploration (10.2) mobile par rapport à cette dernière, la plage de mesure de l'appareil de mesure de longueur (10) correspondant sensiblement à l'amplitude de déplacement possible des éléments de machine (2, 9) déplacés l'un par rapport à l'autre,
- un chariot de mesure (11) sur lequel est prévue l'unité d'exploration (10.1), le chariot de mesure (11) étant simultanément le support d'au moins un appareil supplémentaire de mesure de longueur (8 à 21) pour la mesure du décalage axial entre le chariot de mesure (11) et le support (17) susceptible d'être relié de façon amovible à l'autre élément de machine (9).

2. Dispositif de mesure suivant la revendication 1, dans lequel il est prévu entre le support (17) et le chariot de mesure (11), une articulation (15, 16) avec au moins deux second et troisième axes de rotation (D3, D4) perpendiculaires l'un à l'autre, autour desquels le support (17) peut pivoter par rapport au chariot de mesure (11)

3. Dispositif de mesure suivant la revendication 2, dans lequel les second et troisième axes de rotation (D3, D4) sont situés dans un plan qui est parallèle au plan dans lequel le chariot de mesure (11) est déplaçable en translation par rapport au guide (7).

4. Dispositif de mesure suivant la revendication 2 ou 3, dans lequel il est prévu, entre le support (17) et le chariot de mesure (11), une articulation supplémentaire (14) avec un quatrième axe de rotation (D2) perpendiculaire aux axes de rotation précités (D3, D4).

5. Dispositif de mesure suivant la revendication 4, dans lequel l'articulation (14, 15, 16) est une articulation à la cardan avec trois axes d'articulation perpendiculaires les uns aux autres, constituant les axes de rotation (D2, D3, D4).

6. Dispositif de mesure suivant l'une des revendications 2 à 5, dans lequel une surface de palpage (11.1) est prévue sur le chariot de mesure (11) ou sur le support (17), et dans lequel au moins trois appareils de mesure de longueur (18 à 21) répartis dans l'espace sont fixés au support (17) ou au chariot de mesure (11) opposé, lesquels appareils coopèrent avec la surface de palpage (11.1), les mouvements relatifs de rotation entre le support (17) et le chariot de mesure (11) autour des axes de rotation (D3, D4) entraînant, entre la surface de palpage (11.1) et les appareils de mesure de longueur (18 à 21), des variations de distance qui peuvent être mesurées à l'aide des appareils de mesure de longueur (18 à 21).

7. Dispositif de mesure suivant l'une des revendications 4 ou 5, dans lequel un appareil supplémentaire de mesure d'angle (22) est prévu pour la mesure des mouvements de rotation entre le chariot de mesure (11) et le support (17) autour du quatrième axe de rotation (D2).

8. Dispositif de mesure suivant la revendication 5, dans lequel des appareils de mesure d'angle (22) sont fixés aux trois arbres d'articulation, les appareils de mesure d'angle (22) permettant de mesurer les mouvements de rotation entre le support (17) et l'élément de mesure (11) autour des trois axes de rotation (D2, D3, D4).

9. Dispositif de mesure suivant l'une des revendications précédentes, dans lequel le guide (7) présente une longueur qui correspond au moins à peu près à l'amplitude de déplacement possible des éléments de machine (2, 9) déplacés l'un par rapport à l'autre.

10. Dispositif de mesure suivant la revendication 9, dans lequel la règle de mesure (10.1) est prévue sur le guide (7).

11. Dispositif de mesure suivant l'une des revendications précédentes, dans lequel le chariot de mesure (11) et le support (17) de l'élément de mesure (8) sont reliés de façon amovible l'un à l'autre en passant par un accouplement (13.1 à 13.4).

12. Dispositif de mesure suivant la revendication 11, dans lequel l'accouplement est un guide linéaire composé de plusieurs broches (13.1, 13.2) et de douilles correspondantes (13.3, 13.4).

13. Dispositif de mesure suivant la revendication 12, dans lequel les douilles (13.3, 13.4) sont disposées sur un arbre d'articulation d'une articulation de rotation (15) et les broches (13.1, 13.2) sont disposées sur le chariot de mesure (11) et s'étendent perpendiculairement au premier guide linéaire (7) ainsi que parallèlement au premier axe de rotation (D1).

14. Dispositif de mesure suivant la revendication 12 ou 13, dans lequel des éléments de positionnement (25, 26) sont prévus sur le support (17), ces éléments pouvant être amenés en prise avec les douilles (13.3, 13.4) pendant l'opération de liaison du support (17) et du chariot de mesure (11) et être amenés hors de prise après l'établissement de la liaison.

15. Procédé de contrôle de la précision géométrique et dynamique d'une tête de travail (9) à commande numérique de dispositifs automatiques de fabrication ou de manipulation avec un dispositif de mesure (1) suivant l'une des revendications 11 à 14, l'accouplement du support (17) avec le chariot de mesure (11) s'effectuant par commande numérique.

16. Procédé suivant la revendication 15, l'accouplement réalisé étant signalé à la commande numérique à la suite de quoi est démarré un programme de mesure pour le déplacement par commande numérique des deux éléments de machine (2, 9) déplaçables l'un par rapport à l'autre.
